# EUROPEAN PATENT SPECIFICATION

(11) **EP 3 382 335 B1**
(45) Date of publication and mention of the grant of the patent: **02.10.2019**
(21) Application number: 18163948.5
(22) Date of filing: 26.03.2018
(51) Int. Cl.: G01B 11/26

(54) **SYSTEM, METHOD AND COMPUTER PROGRAM PRODUCT FOR DETERMINING A POSITION AND/OR ATTITUDE OF AN OFFSHORE CONSTRUCTION**
SYSTEM, VERFAHREN UND COMPUTERPROGRAMMPRODUKT ZUR ERMITTLUNG DER POSITION UND/ODER DES LAGEWINKELS EINER OFFSHORE-ANLAGE
SYSTÈME, MÉTHODE ET PRODUIT DE PROGRAMME INFORMATIQUE POUR DÉTERMINER LA POSITION ET/OU LA POSTURE D'UNE CONSTRUCTION OFFSHORE

(30) Priority: 31.03.2017 NL 2018630
(43) Date of publication of application: 03.10.2018
(73) Proprietor: Pliant Holding B.V., 4817 ZB Breda (NL)
(72) Inventor: KLEIJWEG, Walter Adrianus Gerardus, 2651 CJ Berkel en Rodenrijs (NL); DE JONGE, Arnold Werner, 2614 BM Delft (NL)
(74) Representative: DeltaPatents B.V.

(56) References cited:
- US-A1- 2009 262 974
- US-A1- 2013 010 070
- US-A1- 2015 116 693
- US-A1- 2016 010 989
- US-A1- 2016 063 709

## Description

### FIELD OF THE INVENTION

The invention relates to a measurement system for determining a position and/or an attitude of a construction or construction part, and to a vehicle comprising such a measurement system. The invention also relates to a method of determining a position and/or an attitude of a construction. Finally, the invention relates to a computer program product comprising instructions for causing a processor to perform the method as described above.

### BACKGROUND ART

For the installation of offshore structures on or in the sea bed, such as wind turbines or drilling platforms, work is generally performed from a suitable barge or vessel using cranes and other lifting facilities. In the case of wind turbines, a single pile may be driven into the seabed using a hydraulic hammer or other pile-driving facility mounted on a heavy lift vessel. These mono-piles need to be installed vertically and it is essential that during driving the verticality is continuously monitored and, where necessary, corrected.

In publication WO 2014/133381 A1 a system for measuring the attitude of an offshore pile (also referred to as mono-pile) is described. The system comprises a first imaging device for producing image data for the offshore pile from a first direction, a second imaging device for producing image data for the offshore pile from a second direction. The second direction is perpendicular to the first direction or at least has a component perpendicular to the first direction.

In an embodiment the prior art system comprises a first camera and a second camera mounted on a barge within view of the mono-pile and directed towards it. The two cameras are mounted to view the mono-pile from orthogonal directions i.e. the lines of sight from the respective camera to the mono-pile are perpendicular to each other. The first camera is aimed along a left hand edge of the mono-pile and is aligned across the barge in an X-direction. The second camera is aimed at a right hand edge of the mono-pile and directed in a Y-direction with respect to the frame of reference of the barge. An attitude sensing arrangement is provided for determining an attitude of the first and second cameras with respect to the fixed frame of reference at the time the respective images are taken and for generating attitude data. An image processing system analyses and combines the respective image data and attitude data to determine the attitude of the mono-pile.

US 2016/0063709 A1 discloses a measurement system for determining a position and/or attitude of an offshore construction in a fixed frame of reference. This system comprises a camera to be installed on a vessel for capturing images of a plurality of markers arranged on the offshore construction, an attitude sensing arrangement adapted to determine an attitude of the camera and a data processing system arranged to determine the position and/or attitude of the offshore construction based on the captured images and the determined attitude of the camera.

### SUMMARY OF THE INVENTION

Drawback of the known art is that two cameras are needed to determine the attitude of the mono-pile. Furthermore, by using cameras, the accuracy of the measurement system will greatly depend on the light and/or weather conditions (sun / day / night / rain).

One of the objectives of the invention is to provide a measurement system for determining a position and/or an attitude of a construction which solves at least one of the problems of the state of the art measurement system.

A first aspect of the invention, which is defined in the independent apparatus claim 1, provides a measurement system for determining a position and/or an attitude of a construction. The measurement system comprises a 3D distance measuring device arranged to measure distances between the 3D distance measuring device and multiple points on the construction by measuring at least part of the construction. The measurement system also comprises a data processing system arranged for:
- generating 3D information of the construction using the measured distances,
- determining the position and/or attitude of the construction with reference to a fixed frame of reference using the 3D information of the construction.

A system in accordance with the first aspect of the invention is able to determine a position and/or an attitude of a construction, such as on offshore object, by measuring distances between a 3D distance measurement device and the object and processing the 3D information.

The inventors have realized that a 3D distance measurement device, such as a 2D or 3D laser scanner, will give enough information on a building construction, such as offshore objects, to determine its position or orientation. No second detection device is needed. This will reduce costs and will obviate the need for a second location for a detection device as was the case with the prior art system in which two cameras were needed.

According to the first aspect of the invention, the measurement system comprises an attitude sensing arrangement arranged to determine an attitude of the 3D distance measuring device with respect to the fixed frame of reference at each time a respective one of the distances is measured and to provide device attitude data, wherein the data processing system is arranged for combining the measured distances and the device attitude data to generate the 3D information of the construction.

By determining the attitude of the measurement device, a movement of the device is compensated for. This is advantageous if the measurement device is installed on a moving vehicle. The movement of the vehicle is then compensated for. The moving vehicle may be a vessel, a floating platform on sea, a truck, a car, or a flying vehicle such as a drone.

It is noted that the measurement system can also be used on the ground in a static configuration.

Optionally, the 3D measurement device is a laser scanner, such as a 2D or 3D laser scanner. Such a device can generate accurate measurement of objects or part of objects. As compared to cameras, also a laser scanner is much less depending on light conditions.

According to the first aspect of the invention, the data processing system is arranged to fit digital 3D object data, representing one or more predefined objects, onto the 3D information of the construction so as to determine the position and/or attitude of the construction.

Optionally, the construction is a mono-pile wherein the data processing system is arranged to determine the verticality of the mono-pile. When installing mono-piles on sea or on land it is preferred to position them in an optimal orientation. By determining the verticality during installation, the orientation of the mono-piles can be corrected so as to achieve an optimal orientation.

According to the first aspect of the invention, the data processing system is arranged to generate a control signal indicative of a deviation of the position and/or attitude of the construction relative to a target position and/or attitude. This control signal can be used to automatically adjust the positioning of an object during the installation. No intermediate manual measurements are needed, and also no operator might be needed if the process in fully automated.

Optionally, the measurement system comprises a transport system arranged to move the 3D distance measuring device from a first location to a second location remote from the first location.

Optionally, the 3D distance measurement device is one out of a 2D laser scanner, a 3D laser scanner, an echoscope, or an ultrasound measurement device. The laser scanner is preferred in situation above sea level, whereas the echoscope, or the ultrasound measurement device will give good results under water.

A second aspect of the invention, which is defined in claim 5, provides a vehicle comprising a measurement system as described above. The vehicle may be a vessel or floating platform for installing offshore objects.

The vehicle may comprise tilting means for tilting a construction during installation, wherein the measurement system comprises a controller arranged to receive information from the data processing system and to control the tilting means depending on the determined position and/or attitude of the construction.

Optionally, the 3D distance measuring device is arranged below water level.

A third aspect of the invention, which is disclosed in the independent method claim 9, provides a method of determining a position and/or an attitude of a construction, the method comprising:
- obtaining measured distances provided by a 3D distance measurement device, the distances being measured by the 3D distance measurement device for multiple points on the construction by measuring at least part of the construction;
- generating 3D information of the construction using the measured distances,
- determining the position and/or attitude of the construction with reference to a fixed frame of reference using the 3D information of the construction.

According to the third aspect of the invention, the method comprises:
- obtaining device attitude data provided by an attitude sensing arrangement, the device attitude data representing an attitude of the 3D distance measurement device with respect to the fixed frame of reference at each time a respective one of the distances is measured;
- combining the measured distances and the device attitude data to generate 3D information of the construction; and
- generating a control signal indicative of a deviation of the position and/or attitude of the construction relative to a target position and/or attitude.

A fourth aspect of the invention provides a computer program product comprising instructions for causing a processor to perform the method as described above.

### BRIEF DESCRIPTION OF THE DRAWINGS

These and other aspects of the invention are apparent from and will be elucidated with reference to the embodiments described hereinafter. In the drawings,
Figure 1 schematically shows a top view of a vessel on which a measurement system according to an embodiment is installed for determining a position and/or an attitude of an offshore object, such as a mono-pile;
Figure 2 schematically shows a side view of the vessel and the mono-pile;
Figure 3 is a schema of the measurement system according to an embodiment;
Figure 4 shows a picture of an example of a point cloud as generated by the measurement system;
Figure 5 shows a flow chart of a method of determining a position and/or an attitude of an offshore object from a vessel according to an embodiment;
Figure 6 shows a computer readable medium comprising such a computer program product.

It should be noted that items which have the same reference numbers in different Figures, have the same structural features and the same functions, or are the same signals. Where the function and/or structure of such an item has been explained, there is no necessity for repeated explanation thereof in the detailed description.

### DETAILED DESCRIPTION OF EMBODIMENTS

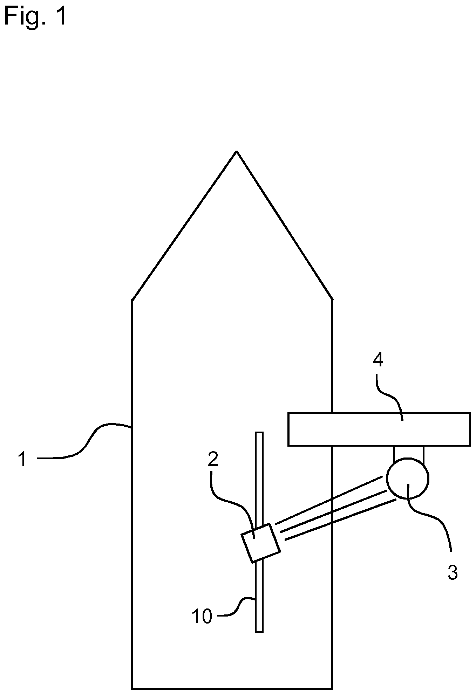

Figure 1 schematically shows a top view of a vessel 1 on which a measurement system according to an embodiment is installed. The measurement system comprises a 2D laser scanner 2 and some processing means as will be described in more detail below. Figure 1 also shows a mono-pile 3 to be installed into the seabed or foundation. The mono-pile 3 can be lowered into the water by way of a crane (not shown) installed on the vessel 1 or another vessel. In this example, to hold the mono-pile 3 in place and correct its orientation during installation, a tilting means 4 is arranged on or onto the vessel 1. The tilting means 4 may be a hydraulic positioning mechanism arranged to position part of the mono-pile relative to the vessel or platform. The tilting means may comprise a crane for lifting the mono-pile and tilting towards a target orientation.

Furthermore, an optional transport system 10 is arranged on the vessel 1 to move the 2D laser scanner 2 from a first location to a second location remote from the first location. The transport system 10 may comprise a rail on which the 2D laser scanner 2 is movably arranged. In this way, the 2D laser scanner can be moved in between measurement sessions, or even during measurement.

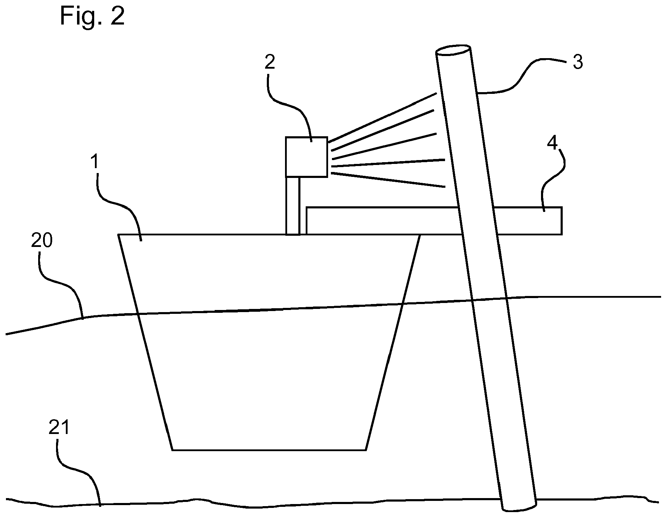

Figure 2 schematically shows a side view of the vessel 1 and the mono-pile 3. Once the pile 3 is placed onto the seabed 21, the pile 3 can be hammered or vibrated into the seabed 21 by way of a hammer (not shown) or vibrating mechanism (not shown). As can be seen from Figure 2, the 3D scanner 2 is arranged on deck, so above sea level 20. It is noted that in an alternative embodiment, the 3D scanner 2 is an echoscope or an ultrasound / laser scanning device arranged to scan under water. In this way, the offshore object, such as the mono-pile 3, can be measured under water. This may be advantageous in situations wherein not enough, or not any, of the structure(s) is above the waterline to determine the desired accuracy.

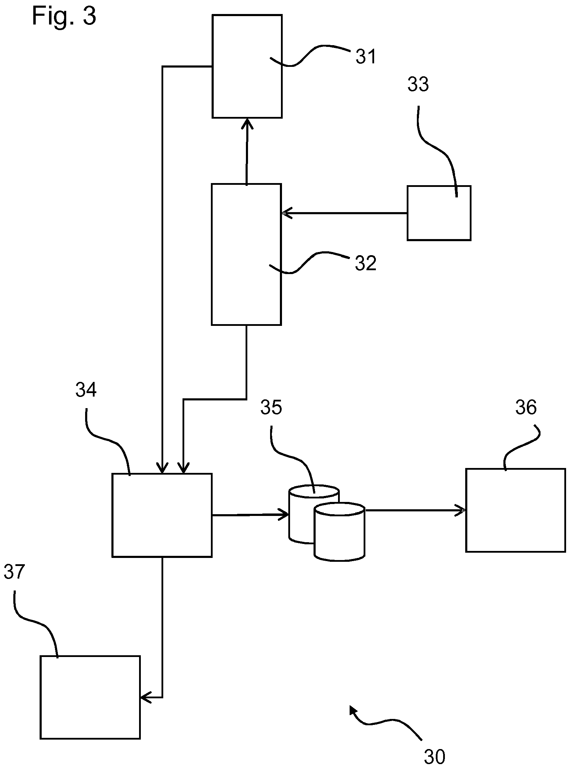

Figure 3 is a schema of the measurement system 30 according to an embodiment. The measurement system 30 comprises a 2D laser scanner 31, an IMU (Inertial Measurement Unit) 32, a GNNS (Global Navigation Satellite System) antenna, such as a GPS (Global Position System) antenna 33, a first computing device 34, data storage 35, a second computing device 36 and a ships control 37. The IMU 32 receives GNSS data from the GNSS antenna 33. The IMU 32 is arranged for motion compensation in xyz direction for both position as rotation and generates attitude data. The IMU 32 will send the attitude data, the GNSS data and also a synchronisation pulse to the 2D laser scanner or the computing device 31. The 2D laser scanner 31 is arranged to provide 3D distance information.

The 3D distance information is sent to the first computing device 34, via e.g. a CAT6 Ethernet connection. The IMU 32 is arranged to provide motion and position data, and send this motion and position data to the first processing device 34. The first processing device 34 is arranged to combine the 3D distance information and the motion and position data to determine 3D information on the scanned object with reference to a fixed frame of reference. The 3D information on the scanned object represents the points on the surface of the object and holds information on the attitude of the object. In an embodiment, the first processing device 34 is arranged to determine the orientation of an offshore construction, such as a mono-pile, using the 3D information on a construction. This may be done by fitting a so-called 3D template onto the determined 3D information, also referred to as point cloud. A point cloud is a digitized model of at least part of the construction represented by multiple points each having their own coordinates. The 3D template can be any 3D description of the construction building part, such as STL file, points file or other digital 3D format.

In an embodiment, the processing device 34 runs a software program enabling the processing device 34 to filter points measured on objects which are obstructing the measurement to the measured construction. By using point cloud filtering techniques it is possible to filter objects like snow, rain, wires, hoses, fences, persons, machinery and other obstructions. The processing device 34 may also be able to calculate the reliability of the measurement and the estimation of the maximum error. This filtering options are a big advantage of this technology in comparison to measurements performed by 2D camera technology which is very sensitive and much less robust for distinctions and objects in the field of view.

Optionally, the first processing device 34 stores historical data on a redundant Network Area Storage (NAS) 35 so that it can be made available for a survey system, see the second processing device 36. It is noted that instead of a NAS other types of storage may be used.

The 2D laser scanner 31 of the measurement system can be pointed to the measured object or construction. The 2D laser scanner 31 will measure distance to the object which results in one or more distance points which will generate 3D point coordinates, for instance in X,Y,Z coordinates. Because the 2D laser scanner 31 is connected to the IMU 32 with an optional GNSS sensor (or some other sort of motion detection device or (ships) sensor) the points can be corrected for the movement of the point cloud generating device, which results in measured points which can be in world coordinates (i.e. a fixed frame of reference). This will result in a real world 3D point cloud which is processed on the first computing device 34. From this point cloud objects (cylinders, spheres, blocks, or other geometries described by digital models) can be recognized and the position and attitude and other properties can be determined. The first computing device 34 can optionally be connected to the ships control 37 for automatic control of the installation process. The determined orientation of the mono-pile 3 can be used to calculate a deviation from a target orientation. This deviation can be used to generate a control signal for the crane and/or the tilting means 4. In this way, no human controller is needed to correct for possible deviations.

As mentioned above, the data generated by the first processing device 34 can be stored to one or multiple storage disks, see NAS 35, as survey data or later analysis. From the second computing device 36 which is connected to the storage this data can also be viewed and analyzed during the operation.

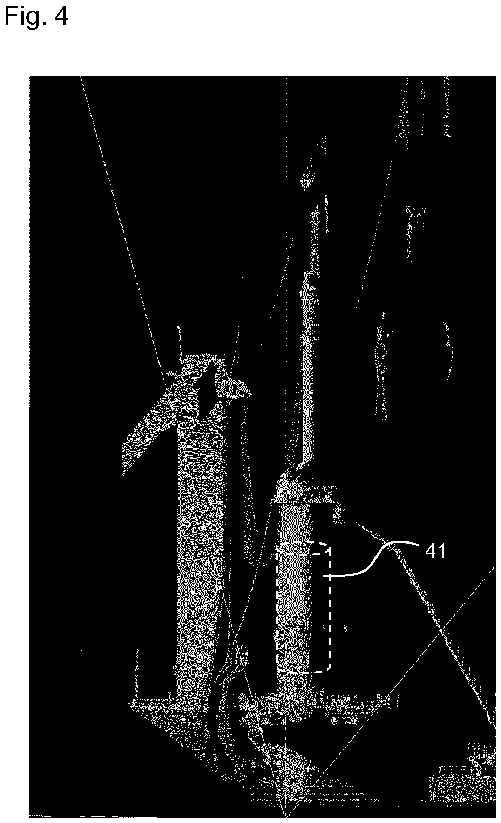

Figure 4 shows a picture of an example of a point cloud as generated by the measurement system as described above. As can be seen from Figure 4, a cylindrical object can be recognized. This is a mono-pile of which the orientation can be determined by fitting a 3D object 41 onto the point cloud. It is noted that fitting of possible 3D objects will be performed by the first processing device 34, and that there will be no need for representing the point cloud on a screen or paper as was done in Figure 4. Figure 4 merely serves for explaining the method. Optionally the two processing devices can also be integrated in one processing device.

It is noted that the laser scanner 2, 31 can be mounted on a rail 10, see Figure 1, to be able to transport the laser scanner to different locations on a vessel. In this way, point clouds from different locations can be determined. Alternatively, a second or multiple laser scanner(s) could be used and located at a second or other location on the vessel or on another vessel or any other position. In both embodiments, point clouds are determined out of different positions, and thus out of different orientations. The first processing device 31 may be arranged to stitch together multiple point clouds (i.e. combine them) from multiple scanners or positions of one scanner. For example a large object such as an oil platform can be scanned with multiple scanners or by one scanner from a vessel which is floating around the platform. Complex shapes can be digitized by stitching point cloud data from multiple, strategically placed laser scanners. It is noted that in case of measuring relatively simple structures like mono-piles, only a single laser scanner will be sufficient. For extra accuracy of stitching the clouds together, reference spheres or other reference elements can be placed in the scanned area.

Although above the invention is described with reference to measuring an orientation of an offshore object, it should be noted that the invention also relates to the measurement of onshore objects. These onshore objects, may for example be piles used for a foundation of an onshore wind mill. The attitude measurements may be performed using a 3D distance measurement device, such as a 2D or 3D laser scanner, and may be performed from a static location or from a moving vehicle, such as a truck or car. In the latter case, the measurement system may comprise an attitude sensing arrangement arranged to determine an attitude of the 3D distance measuring device scanner with respect to the fixed frame of reference at each time a respective one of the distances is measured and to provide scanner device attitude data.

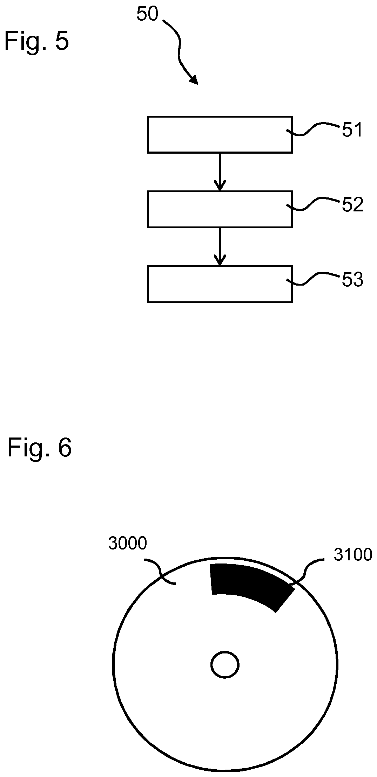

Figure 5 shows a flow chart of a method 50 of determining a position and/or an attitude of a construction according to an embodiment. The method comprises an action of obtaining measured distances, see action 51, provided by a 3D distance measurement device, the distances being measured by the 3D distance measurement device for multiple points on the construction by scanning at least part of the construction. The method further comprises generating 3D information of the construction, see action 52, using the measured distances. The method also comprises determining, see action 53, the position and/or attitude of the construction with reference to a fixed frame of reference using the 3D information of the construction.

In an embodiment, the method comprises obtaining device attitude data provided by an attitude sensing arrangement (32), the device attitude data representing an attitude of the 3D distance measurement device with respect to the fixed frame of reference at each time a respective one of the distances is measured;
- combining (53) the measured distances and the device attitude data to generate 3D information of the construction.

According to an aspect, there is provided a computer program product comprising instructions for causing a processor to perform the method as described with reference to Figure 5.

Figure 6 shows a computer readable medium 3000 comprising such a computer program product. The computer program product 3100 may be embodied on the computer readable medium 3000 as physical marks or by means of magnetization of the computer readable medium 3000. However, any other suitable embodiment is conceivable as well. Furthermore, it will be appreciated that, although the computer readable medium 3000 is shown in Figure 6 as an optical disc, the computer readable medium 3000 may be any suitable computer readable medium, such as a hard disk, solid state memory, flash memory, etc., and may be non-recordable or recordable. The term "program," as used herein, is defined as a sequence of instructions designed for execution on a computer system. A program, or computer program, may include a subroutine, a function, a procedure, an object method, an object implementation, an executable application, an applet, a servlet, a source code, an object code, a shared library/dynamic load library and/or other sequence of instructions designed for execution on a computer system.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A measurement system (30) for determining a position and/or attitude of an offshore construction (3) or part of an offshore construction in a fixed frame of reference by observations from a moving vehicle, the measurement system comprising:
- a measuring device (2,31) to be installed on the vehicle;
- an attitude sensing arrangement (32) arranged to determine an attitude of the measuring device, and
- a data processing system arranged for determining the position and/or attitude of the construction with reference to the fixed frame of reference,
**characterized in that** the measuring device is a 3D distance measuring device (2,31) arranged to measure distances between the 3D distance measuring device and multiple points on the construction by measuring at least part of the construction, and
wherein the data processing system (34) is arranged for:
- generating 3D information of the construction using the measured distances;
- determining the position and/or attitude of the construction with reference to the fixed frame of reference using the 3D information of the construction, by fitting digital 3D object data representing one or more predefined objects, onto the 3D information of the construction so as to determine the position and/or attitude of the construction, and
- generating a control signal indicative of a deviation of the position and/or attitude of the construction relative to a target position or attitude, wherein the attitude sensing arrangement (32) is arranged to determine an attitude of the 3D distance measuring device with respect to the fixed frame of reference at each time a respective one of the distances is measured and to provide device attitude data,
wherein the data processing system (34) is arranged for combining the measured distances and the device attitude data to generate the 3D information of the construction.

2. The measurement system according to claim 1, wherein the construction is a mono pile (3) and wherein the data processing system is arranged to determine the verticality of the mono pile (3).

3. The measurement system according to any one of the preceding claims, wherein the measurement system comprises a transport system arranged to move the 3D distance measuring device from a first location to a second location remote from the first location.

4. The measurement system according to any one of the preceding claims, wherein the 3D distance measurement device (2, 31) is one out of:
- a 2D laser scanner;
- a 3D laser scanner;
- an echoscope;
- an ultrasound measurement device.

5. A vehicle (1) comprising a measurement system according to any one of the preceding claims.

6. The vehicle according to claim 5, wherein the vehicle comprises tilting means for tilting a construction during installation, the system comprising a controller (37) arranged to receive information from the data processing system and to control the tilting means depending on the determined position and/or attitude of the construction.

7. The vehicle according to claim 5 or 6, wherein the vehicle is a vessel or floating platform.

8. The vehicle according to claim 7, wherein the 3D distance measurement device is arranged below water level.

9. A method of determining (50) a position and/or attitude of an offshore construction (3) or part of an offshore construction in a fixed frame of reference by observations from a moving vehicle, the method comprising:
- obtaining measured distances (51) provided by a 3D distance measurement device installed on a moving vehicle, the distances being measured by the 3D distance measurement device for multiple points on the construction by measuring at least part of the construction;
- generating (52) 3D information of the construction using the measured distances,
- determining (53) the position and/or attitude of the construction with reference to the fixed frame of reference using the 3D information of the construction, by fitting digital 3D object data representing one or more predefined objects, onto the 3D information of the construction so as to determine the position and/or attitude of the construction;
- obtaining device attitude data provided by an attitude sensing arrangement (32), the device attitude data representing an attitude of the 3D distance measurement device with respect to the fixed frame of reference at each time a respective one of the distances is measured;
- combining the measured distances and the device attitude data to generate the 3D information of the construction;
- generating a control signal indicative of a deviation of the position and/or attitude of the construction relative to a target position and/or attitude.

10. A computer program product (3100) comprising instructions for causing a processor to perform a method according to claim 9.

## Patentansprüche

1. Messsystem (30) zum Ermitteln einer Position und/oder eines Lagewinkels einer Offshore-Anlage (3) oder eines Teils einer Offshore-Anlage in einem festgesetzten Bezugsrahmen durch Beobachtung aus einem sich bewegenden Fahrzeug, das Messsystem umfassend:
- Messvorrichtung (2,31), die an dem Fahrzeug zu installieren ist;
- eine Lagewinkelerfassungsanordnung (32), die angeordnet ist, einen Lagewinkel der Messvorrichtung zu ermitteln, und
- ein Datenverarbeitungssystem, das zum Ermitteln der Position und/oder des Lagewinkels der Anlage in Bezug auf den festgesetzten Bezugsrahmen angeordnet ist, **dadurch gekennzeichnet, dass** die Messvorrichtung
eine 3D-Abstandsmessvorrichtung (2,31) ist, die angeordnet ist, Abstände zwischen der 3D-Abstandmessvorrichtung und mehreren Punkten auf der Anlage durch Messen mindestens eines Teils der Anlage zu messen, und wobei das
Datenverarbeitungssystem (34) angeordnet ist zum:
- Erzeugen von 3D-Informationen der Anlage, unter Verwendung der gemessenen Abstände;
- Ermitteln der Position und/oder des Lagewinkels der Anlage mit Bezug auf den festgesetzten Bezugsrahmen, unter Verwendung der 3D-Informationen der Anlage, durch Anpassen von digitalen 3D-Objektdaten, die ein oder mehrere vordefinierte Objekte darstellen, an die 3D-Informationen der Anlage, um so die Position und/oder den Lagewinkel der Anlage zu ermitteln, und
- Erzeugen eines Steuersignals, das eine Abweichung der Position und/oder des Lagewinkels der Anlage relativ zu einer Zielposition oder einem Ziellagewinkel angibt, wobei die Lagewinkelerfassungsanordnung (32) angeordnet ist, einen Lagewinkel der 3D-Abstandsmessvorrichtung in Bezug auf den festgesetzten Bezugsrahmen immer dann zu ermitteln, wenn ein jeweiliger der Abstände gemessen wird, und Vorrichtungslagewinkeldaten bereitzustellen,
wobei das Datenverarbeitungssystem (34) zum Kombinieren der gemessenen Abstände und der Vorrichtungslagewinkeldaten angeordnet ist, um die 3D-Informationen der Anlage zu erzeugen.

2. Messsystem nach Anspruch 1, wobei die Anlage ein Monopile (3) ist und wobei das Datenverarbeitungssystem angeordnet ist, die Senkrechte des Monopiles (3) zu ermitteln.

3. Messsystem nach einem der vorstehenden Ansprüche, wobei das Messsystem ein Transportsystem umfasst, das angeordnet ist,
die 3D-Abstandsmessvorrichtung von einer ersten Stelle zu einer zweiten Stelle fern der ersten Stelle zu bewegen.

4. Messsystem nach einem der vorstehenden Ansprüche, wobei die 3D-Abstandsmessvorrichtung (2, 31) eine ist von:
- einem 2D-Laserscanner;
- einem 3D-Laserscanner;
- einem Echoskop;
- einer Ultraschallmessvorrichtung.

5. Fahrzeug (1), umfassend ein Messsystem nach einem der vorstehenden Ansprüche.

6. Fahrzeug nach Anspruch 5, wobei das Fahrzeug Kippmittel zum Kippen einer Anlage während Installation umfasst, wobei das System eine Steuerung (37) umfasst, die angeordnet ist, Informationen vom Datenverarbeitungssystem zu empfangen und die Kippmittel abhängig von der ermittelten Position und/oder dem Lagewinkel der Anlage zu steuern.

7. Fahrzeug nach Anspruch 5 oder 6, wobei das Fahrzeug ein Schiff oder eine schwimmende Plattform ist.

8. Fahrzeug nach Anspruch 7, wobei die 3D-Abstandsmessvorrichtung unter Wasserspiegel angeordnet ist.

9. Verfahren zum Ermitteln (50) einer Position und/oder eines Lagewinkels einer Offshore-Anlage (3) oder eines Teils einer Offshore-Anlage in einem festgesetzten Bezugsrahmen durch Beobachtungen von einem bewegenden Fahrzeug, das Verfahren umfassend:
- Erhalten gemessener Abstände (51), die von
einer 3D-Abstandsmessvorrichtung, die an einem sich bewegenden Fahrzeug installiert ist, bereitgestellt werden, wobei die Abstände von der 3D-Abstandsmessvorrichtung für mehrere Punkte auf der Anlage durch Messen mindestens eines Teils der Anlage gemessen werden;
- Erzeugen (52) von 3D-Informationen der Anlage unter Verwendung der gemessenen Abstände,
- Ermitteln (53) der Position und/oder des Lagewinkels der Anlage in Bezug auf den festgesetzten Bezugsrahmen unter Verwendung der 3D-Informationen der Anlage, durch Anpassen digitaler 3D-Objektdaten, die ein oder mehr vordefinierte Objekte darstellen, an die 3D-Informationen der Anlage, um die Position und/oder den Lagewinkel der Anlage zu ermitteln;
- Erhalten von Vorrichtungslagewinkeldaten durch eine Lagewinkelerfassungsanordnung (32), wobei die Vorrichtungslagewinkeldaten einen Lagewinkel der 3D-Abstandsmessvorrichtung in Bezug auf den festgesetzten Bezugsrahmen darstellen, immer dann, wenn ein jeweiliger der Abstände gemessen wird;
- Kombinieren der gemessenen Abstände und der Vorrichtungslagewinkeldaten, um die 3D-Informationen der Anlage zu erzeugen;
- Erzeugen eines Steuersignals, das eine Abweichung der Position und/oder des Lagewinkels der Anlage relativ zu einer Zielposition und/oder einem Ziellagewinkel angibt.

10. Computerprogrammprodukt (3100), umfassend Anweisungen zum Veranlassen eines Prozessors, ein Verfahren nach Anspruch 9 auszuführen.

## Revendications

1. Un système de mesure (30) pour déterminer une position et/ou une posture d'une construction offshore (3) ou une partie d'une construction offshore dans un cadre de référence fixe par des observations à partir d'un véhicule mobile, le système de mesure comprenant :
- un dispositif de mesure (2, 31) à installer sur le véhicule ;
- un agencement de détection de posture (32) agencé pour déterminer une posture du dispositif de mesure, et
- un système de traitement de données agencé pour déterminer la position et/ou la posture de la construction par rapport au cadre de référence fixe,
**caractérisé en ce que** le dispositif de mesure est un dispositif de mesure de distances 3D (2, 31) agencé pour mesurer les distances entre le dispositif de mesure de distances 3D et de multiples points sur la construction en mesurant au moins une partie de la construction, et dans lequel le système de traitement de données (34) est agencé pour :
- générer des informations 3D de la construction en utilisant les distances mesurées ;
- déterminer la position et/ou la posture de la construction en se référant au cadre de référence fixe en utilisant les informations 3D de la construction, en adaptant les données d'objet(s) 3D numériques représentant un ou plusieurs objets prédéfinis sur les informations 3D de la construction de manière à déterminer la position et/ou la posture de la construction, et
- générer un signal de commande indicatif d'un écart de la position et/ou de la posture de la construction par rapport à une position ou une posture cible, dans lequel l'agencement de détection de posture (32) est agencé pour déterminer une posture du dispositif de mesure de distances 3D par rapport au cadre de référence fixe chaque fois que l'une respective des distances est mesurée et fournir des données de posture du dispositif, dans lequel le système de traitement de données (34) est agencé pour combiner les distances mesurées et les données de posture du dispositif afin de générer les informations 3D de la construction.

2. Le système de mesure selon la revendication 1, dans lequel la construction est un monopieu (3) et dans lequel le système de traitement de données est agencé pour déterminer la verticalité du monopieu (3).

3. Le système de mesure selon l'une quelconque des revendications précédentes, dans lequel le système de mesure comprend un système de transport agencé pour déplacer le dispositif de mesure de distances 3D d'un premier emplacement à un second emplacement éloigné du premier emplacement.

4. Le système de mesure selon l'une quelconque des revendications précédentes, dans lequel le dispositif de mesure de distances 3D (2, 31) est l'un parmi les suivants :
- un scanneur à laser 2D ;
- un scanneur à laser 3D ;
- un échoscope ;
- un dispositif de mesure ultrasonique.

5. Un véhicule (1) comprenant un système de mesure selon l'une quelconque des revendications précédentes.

6. Le véhicule selon la revendication 5, dans lequel le véhicule comprend des moyens d'inclinaison pour incliner une construction au cours de l'installation, le système comprenant un dispositif de commande (37) agencé pour recevoir des informations du système de traitement de données et commander les moyens d'inclinaison en fonction de la position et/ou de la posture déterminée de la construction.

7. Le véhicule selon la revendication 5 ou 6, dans lequel le véhicule est un bateau ou une plateforme flottante.

8. Le véhicule selon la revendication 7, dans lequel le dispositif de mesure de distances 3D est agencé en dessous du niveau de l'eau.

9. Un procédé de détermination (50) d'une position et/ou d'une posture d'une construction offshore (3) ou d'une partie d'une construction offshore dans un cadre de référence fixe par des observations à partir d'un véhicule mobile, le procédé comprenant :
- l'obtention de distances mesurées (51) 3D (2, 31) fournies par un dispositif de mesures de distances 3D installé sur un véhicule mobile, les distances étant mesurées par le dispositif de mesure de distances 3D pour de multiples points sur la construction en mesurant au moins une partie de la construction ;
- la génération (52) d'informations 3D de la construction en utilisant les distances mesurées ;
- la détermination (53) de la position et/ou de la posture de la construction en se référant au cadre de référence fixe en utilisant les informations 3D de la construction, en adaptant les données d'objet(s) 3D numériques représentant un ou plusieurs objets prédéfinis sur les informations 3D de la construction de manière à déterminer la position et/ou la posture de la construction,
- l'obtention de données de posture de dispositif fournies par un agencement de détection de posture (32), les données de posture de dispositif représentant une posture du dispositif de mesure de distances 3D par rapport au cadre de référence fixe chaque fois qu'une respective des distances est mesurée ;
- la combinaison des distances mesurées et des données de posture de dispositif pour générer les informations 3D de la construction ;
- la génération d'un signal de commande indicatif d'un écart de la position et/ou de la posture de la construction par rapport à une position et/ou une posture cible(s).

10. Un produit de programme d'ordinateur (3100) comprenant des instructions pour amener un processeur à effectuer un procédé selon la revendication 9.
